# FASCICULE DE BREVET EUROPEEN

(11) **EP 3 070 317 B1**
(45) Date de publication et mention de la délivrance du brevet: **26.04.2023**
(21) Numéro de dépôt: 16158929.6
(22) Date de dépôt: 07.03.2016
(51) Int. Cl.: F02K 3/115, F02C 7/18, F28F 13/00, F28D 5/02

(54) **REFROIDISSEMENT DE TURBOMACHINE PAR ÉVAPORATION**
KÜHLUNG FÜR TURBOMASCHINE DURCH VERDAMPFUNG
EVAPORATIVE COOLING OF A TURBINE ENGINE

(30) Priorité: 20.03.2015 BE 201505167
(43) Date de publication de la demande: 21.09.2016
(73) Titulaire: Safran Aero Boosters SA, 4041 Herstal (BE)
(72) Inventeur: DUPREZ, Vincent, 4690 Bassenge (BE)
(74) Mandataire: Lecomte & Partners

(56) Documents cités:
- EP-A2- 1 916 399
- US-A- 5 129 446
- US-A- 5 148 859
- US-A1- 2014 027 102
- US-A1- 2015 000 865

## Description

### Domaine technique

L'invention a trait à une turbomachine axiale munie d'un système de refroidissement. L'invention concerne également un turboréacteur doté d'un système de refroidissement air/huile en communication avec le flux secondaire. L'invention aborde de surcroît un procédé de gestion d'un système de refroidissement d'une turbomachine.

### Technique antérieure

Au cours de son fonctionnement, une turbomachine d'aéronef dégage une quantité importante de chaleur. Sa chaleur provient assurément de la compression de l'air et de la combustion ; mais également du frottement dans les engrenages des boîtes de transmission de puissance et dans les paliers. La multiplication des équipements électriques augmente encore cet échauffement. Notons également que certaines phases de fonctionnement, telle décollage, provoque un surplus de chaleur.

La chaleur est véhiculée des sources de chaleur vers les échangeurs via un circuit utilisant un fluide caloporteur. L'huile de lubrification se prête bien à cette fonction puisqu'elle vient au plus près au contact des sources chaudes, et qu'elle est ensuite recueillie. Le refroidissement s'opère grâce à l'ajout d'un échangeur dans lequel circule l'huile recueillie.

Une partie de la chaleur est récupérée pour des fonctions utiles de l'aéronef, dont le dégivrage, le préchauffage du carburant, le chauffage cabine, etc... L'excédent est dissipé dans l'atmosphère via des échangeurs qui transfèrent la chaleur du fluide caloporteur vers l'air. La performance de refroidissement est, entre autres, variable en fonction de l'écart de température entre le fluide caloporteur et l'air. Le refroidissement peut devenir critique dans des déserts où la température de l'air, sensée former une source froide, atteint 50°C. A cela s'ajoute le fait que la capacité thermique de l'air y est faible.

Le document US2009/0007570 A1 divulgue une turbomachine axiale d'avion. La turbomachine comprend une turbine et un compresseur qui sont lubrifiés par un circuit d'huile. Grâce à son échangeur de chaleur, le circuit permet en outre de refroidir l'huile suite à l'échauffement qu'elle subit lorsqu'elle assure sa fonction de lubrification. L'échangeur emploie l'air du flux secondaire qui traversant la turbomachine comme source froide. Cet agencement bénéficie d'un flux important d'air entrant, et permet un refroidissement conséquent.

Toutefois, son refroidisseur est encombrant. En effet, un refroidisseur est habituellement dimensionné pour répondre au besoin maximum, en prenant en compte certaines marges de fonctionnement et l'éventualité d'incidents. Un tel refroidisseur devient lourd, et pénalise la trainée de la turbomachine.

Le document US 2014/0027102 A1 divulgue un échangeur de chaleur pour turboréacteur d'aéronef. L'échangeur comprend une portion principale plane avec des ailettes orientées vers le flux secondaire de la turbomachine, ladite portion plane comprenant un système de canaux permettant le passage de l'huile qui doit être refroidie au contact de l'air.

Le document US 2015/000865 A1 divulgue un échangeur de chaleur pour une turbomachine d'aéronef, ledit échangeur étant constitué par une plaque interne et une plaque externe, entre lesquelles se trouvent plusieurs plaques ondulées. Ce système est également positionné au niveau du carter externe, et permet la circulation de l'huile et sont refroidissement via le flux d'air secondaire.

Le document EP 1 916 399 A2 divulgue un échangeur de chaleur pour un système de lubrification monté dans une turbomachine. L'échangeur est positionné au niveau du flux secondaire et comprend des ailettes augmentant la surface au contact du milieu extérieur afin d'améliorer le refroidissement de l'huile.

Le document US 5 129 446 divulgue un échangeur de chaleur comprenant un dispositif d'injection pour améliorer sa capacité de refroidissement et un système de renforcement par des tubes de l'échangeur.

### Résumé de l'invention

### Problème technique

L'invention a pour objectif de résoudre au moins un des problèmes posés par l'art antérieur. Plus précisément, l'invention a pour objectif de réduire la compacité d'un échangeur de turbomachine. L'invention a également pour objectif de protéger l'huile d'une turbomachine.

### Solution technique

On aura bien compris que l'invention a pour objet une turbomachine en contact d'air environnant, la turbomachine comprenant un circuit d'huile avec un refroidisseur, le refroidisseur comportant une première surface d'échange thermique, telle une surface chaude, en contact de l'huile du circuit d'huile ; et une deuxième surface d'échange thermique, telle une surface froide, en contact de l'air ambiant ; remarquable en ce que le système de refroidissement comprend un dispositif d'injection de liquide de refroidissement sur le refroidisseur, par exemple sur la deuxième surface d'échange thermique.

L'invention a également pour objet une turbomachine axiale d'aéronef destinée à être en contact d'au moins un flux d'air selon la revendication 1.

Selon un mode avantageux de l'invention, la turbomachine comprend un carter annulaire externe délimitant radialement le flux d'air, le dispositif d' injection étant disposé axialement au niveau dudit carter externe.

Selon un mode avantageux de l'invention, la turbomachine comprend deux flux annulaires, dont un flux primaire et un flux secondaire, éventuellement la turbomachine comprend une soufflante.

Selon un mode avantageux de l'invention, le dispositif d'injection comprend des moyens d'injection configurés pour injecter du liquide sur la deuxième surfaces, les moyens d'injection étant placés en amont de la deuxième surface ou au niveau axialement de la moitié amont de la deuxième surface.

Selon un mode avantageux de l'invention, le refroidisseur comprend des ailettes de refroidissement formant la deuxième surface, le dispositif d'injection comprenant des moyens d'injection configurés pour injecter du liquide sur les ailettes.

Selon un mode avantageux de l'invention, le dispositif d'injection comprend des moyens d'injection, tel des orifices d'injection, préférentiellement chaque moyen d'injection est disposé axialement en aval de la soufflante, éventuellement les moyens d'injection sont disposés sur un cercle.

Selon un mode avantageux de l'invention, la turbomachine comprend une veine annulaire guidant le flux d'air et un passage avec une entrée et une sortie toutes deux en communication avec la veine annulaire, le refroidisseur étant placé dans ledit passage.

Selon un mode avantageux de l'invention, la turbomachine comprend un échappement, la turbomachine étant configurée pour évacuer le liquide de la turbomachine via ledit échappement.

Selon un mode avantageux de l'invention, la turbomachine comprend des moyens d'alimentation en liquide, et éventuellement un réservoir de liquide.

Selon un mode avantageux de l'invention, la turbomachine comprend une tuyère convergente divergente, le refroidisseur étant placé en amont de ladite tuyère.

Selon un mode avantageux de l'invention, le refroidisseur présente une forme annulaire, éventuellement le refroidisseur entoure le flux d'air.

Selon un mode avantageux de l'invention, la turbomachine comprend un corps avec un serpentin de refroidissement en communication avec le circuit d'huile, éventuellement le corps est une aube ou un bec de dégivrage de la turbomachine.

Selon un mode avantageux de l'invention, la turbomachine comprend au moins un actionneur commandé par la pression de l'huile du circuit d'huile, préférentiellement elle comprend une pompe pressurisant l'huile vers l'actionneur.

Selon un mode avantageux de l'invention, la turbomachine comprend un réducteur, notamment un réducteur épicycloïdal, qui est lubrifié par l'huile du circuit d'huile, éventuellement la turbomachine comprend une soufflante et/ou un compresseur, le réducteur relie en rotation la soufflante et/ou le compresseur

Selon un mode avantageux de l'invention, la turbomachine comprend un capteur de température de l'huile apte à mesurer la température de l'huile du circuit d'huile, éventuellement le dispositif d'injection est configuré pour injecter du liquide sur la deuxième surface dès que le capteur détecte que la température de l'huile dépasse une température seuil TS.

Selon un mode avantageux de l'invention, la turbomachine est un turboréacteur.

Selon un mode avantageux de l'invention, le refroidisseur de chaleur est placé à l'extérieur du flux primaire et/ou à l'intérieur du flux secondaire.

Selon un mode avantageux de l'invention, l'huile est une huile de refroidissement.

Selon un mode avantageux de l'invention, la turbomachine comprend un compresseur et une chambre de combustion, le refroidisseur étant placé axialement au niveau du compresseur et/ou de la chambre de combustion.

Selon un mode avantageux de l'invention, la turbomachine comprend au moins un ou plusieurs paliers lubrifiés par l'huile du circuit d'huile.

Selon un mode avantageux de l'invention, le circuit d'huile est un circuit fermé, éventuellement le circuit d'huile comprend des boucles parallèles.

Selon un mode avantageux de l'invention, le refroidisseur comprend une couche de matière, éventuellement pleine, disposée entre et/ou formant et/ou reliant la première surface et la deuxième surface. La couche forme une barrière étanche entre les surfaces.

L'invention a également pour objet un procédé de refroidissement d'une turbomachine d'aéronef comprenant un circuit d'huile avec un refroidisseur adapté pour refroidir l'huile du circuit d'huile, le procédé comprenant les étapes suivantes : (a) décollage de l'aéronef ; remarquable en ce que le procédé comprenant en outre une étape (b) refroidissement de l'huile suite ou pendant l'étape (a) décollage ; pendant l'étape (b) refroidissement du liquide est injecté sur le refroidisseur (26) de la turbomachine (2), la turbomachine (2) étant conforme à l'une des revendications 1 à 11.

Selon un mode avantageux de l'invention, le refroidisseur est un refroidisseur air/huile.

Selon un mode avantageux de l'invention, le liquide est injecté lorsque l'accélération du régime de la turbomachine dépasse un seuil AR.

Selon un mode avantageux de l'invention, le liquide est injecté tant que l'altitude de la turbomachine reste inférieure à une altitude seuil AS.

Selon un mode avantageux de l'invention, le liquide est injecté tant que la température de l'huile de lubrification de la turbomachine dépasse un seuil TS.

Selon un mode avantageux de l'invention, lors de l'injection le liquide est configuré pour pouvoir s'évaporer contact du refroidisseur lors du fonctionnement de la turbomachine.

De manière générale, les modes avantageux de chaque objet de l'invention sont également applicables aux autres objets de l'invention. Dans la mesure du possible, chaque objet et chaque mode avantageux sont combinables.

### Avantages apportés

L'invention propose un appoint de refroidissement, spécialement bénéfique lors des sollicitations maximales. L'invention exploite les propriétés endothermiques du liquide, de l'eau ; la transformation en vapeur pour évacuer des calories lors des pics de température. La présence de liquide impacte la masse au décollage, cependant cette présence reste transitoire. A l'opposé, le bénéfice de compacité demeure pendant le vol de croisière.

L'huile est sensible à la température et peut rapidement chauffer, se dégrader. L'évolution de la température de l'huile impacte ses performances, et nuit à sa capacité à lubrifier. L'invention permet donc de contrôler la température de l'huile ; et donc de préserver ses qualités de lubrifiant, tout en maitrisant ses propriétés chimiques telle sa corrosivité.

Prévoir un refroidissement par liquide d'appoint agissant rapidement permet de contrôler la température de l'huile, et d'agir en cas d'incident dans la turbomachine, par exemple en cas de surchauffe moteur, éventuellement en cas d'incendie.

### Brève description des dessins

La figure 1 représente une turbomachine axiale selon l'invention.
La figure 2 est un schéma d'une portion de turbomachine centrée sur un compresseur de selon l'invention.
La figure 3 illustre un diagramme du procédé de refroidissement de la turbomachine.

### Description des modes de réalisation

Dans la description qui va suivre, les termes intérieur ou interne et extérieur ou externe renvoient à un positionnement par rapport à l'axe de rotation d'une turbomachine axiale.

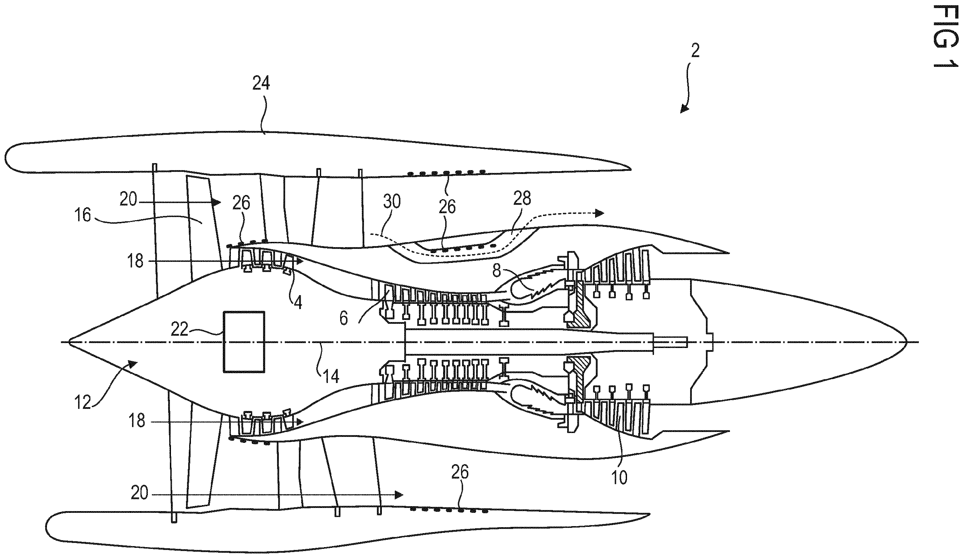

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

La turbomachine rencontre un flux d'air ambiant. Un ventilateur d'entrée communément désigné fan 16 ou soufflante 16 est couplé au rotor 12 et génère un flux d'air qui se divise en un flux primaire 18 traversant les différents niveaux susmentionnés de la turbomachine, et un flux secondaire 20 traversant un conduit annulaire le long de la machine pour ensuite rejoindre le flux primaire 18 en sortie de turbine 10. Le flux secondaire 20 peut être accéléré de sorte à générer une réaction de poussée. Les flux primaire 18 et secondaire 20 sont des flux annulaires, ils sont canalisés par le carter de la turbomachine. A cet effet, le carter présente des parois cylindriques ou viroles qui peuvent être internes et externes. En particulier, le flux secondaire 20 est canalisé par un carter externe 24 formant généralement une paroi annulaire. Ce carter externe peut être la nacelle 24.

Afin de découpler la soufflante du compresseur basse pression, et de la turbine qui l'entraine, la turbomachine comprend une transmission 22, telle une réduction 22. Celle-ci permet de réduire la vitesse de rotation de la soufflante 16 par rapport au compresseur placé en aval. Par ce biais, les différentes parties tournantes peuvent adopter des vitesses de rotation distinctes et optimales, en étant entrainées par un même arbre. Malgré cet avantage, la présence d'une transmission n'est pas indispensable dans l'invention.

La turbomachine 2 comporte un circuit d'huile permettant la lubrification des différents équipements, des paliers, de l'éventuelle transmission 22. Cette huile favorise également leur refroidissement car elle forme un fluide caloporteur qui circule au plus près des points chauds, qui est collectée, puis refroidie. A cette fin, la turbomachine comprend au moins un refroidisseur 26 d'huile, éventuellement plusieurs refroidisseurs 26. Trois refroidisseurs 26 sont représentés, dont un à l'extérieur du flux secondaire dans le carter externe 24, et un sur le bec de séparation du compresseur 4 basse pression. A ce dernier emplacement, le refroidisseur peut assurer une fonction de dégivrage. Au moins un ou chaque refroidisseur 26 peut être circulaire et entourer l'axe de rotation 14, ou encore le flux primaire 18 et éventuellement le flux secondaire 20. D'autres nombre de refroidisseurs 26 sont envisageables.

Au moins un ou chaque refroidisseur 26 peut être un échangeur surfacique, ou un échangeur en forme de bloc, qui présente plusieurs niveaux de circulation d'huile et/ou de plusieurs niveaux de circulation d'air superposés et parallèles.

La turbomachine peut présenter un passage 28 formant une déviation parallèle à la veine secondaire qui conduit le flux secondaire 20. Ce passage 28 présente une entrée et une sortie en communication avec la veine secondaire, ce qui permet de canaliser une fraction 30 du flux secondaire 20. Un refroidisseur 26 peut être placé dans ce passage 28 afin d'employer cette fraction 30 comme source froide.

Au niveau du refroidisseur 26 du bec de séparation 26, la turbomachine peut comprendre une tuyère convergente divergente. Le refroidisseur est placé en amont de ladite tuyère qui est configurée pour optimiser la poussée.

La turbomachine peut comprendre au moins un actionneur, tel un vérin hydraulique. L'actionneur hydraulique est commandé par la pression de l'huile. Pour octroyer une énergie mécanique à l'huile la turbomachine présente une pompe, telle une pompe volumétrique.

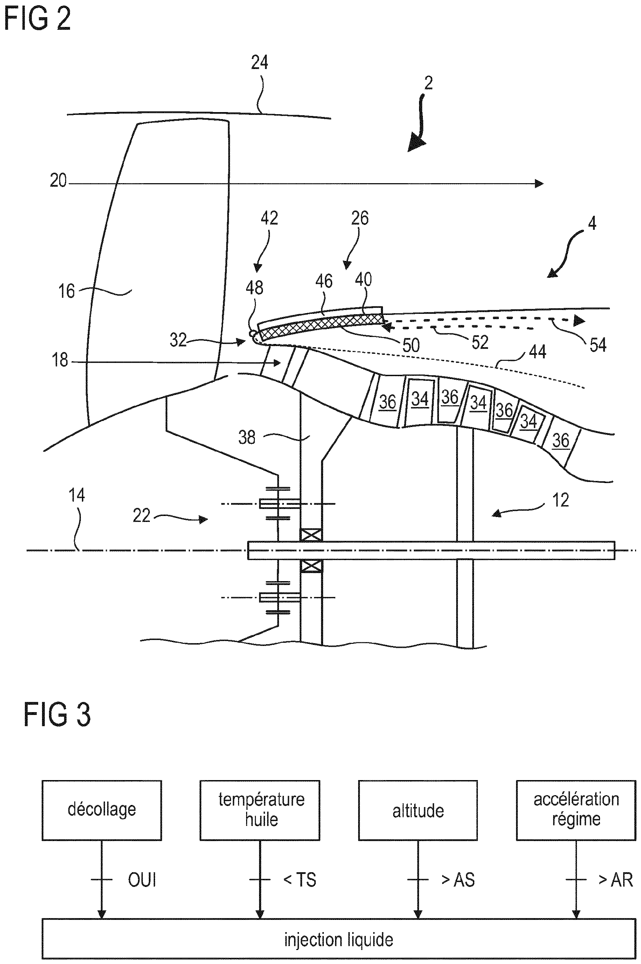

La figure 2 est une vue en coupe d'un compresseur d'une turbomachine 2 axiale telle que celle de la figure 1. Le compresseur peut être un compresseur basse-pression 4. On peut y observer une partie du fan 16 et le bec de séparation 32 du flux primaire 18 et du flux secondaire 20. Le bec de séparation 32 reçoit un refroidisseur 26, dont les caractéristiques présentées ci-dessous peuvent également s'appliquer aux autres refroidisseurs.

Le rotor 12 comprend plusieurs rangées d'aubes rotoriques 34, en l'occurrence trois. Cependant le rotor 12 pourrait comprendre davantage de rangées d'aubes. Les aubes rotoriques 34 peuvent être implantées sur un tambour du compresseur 34, ce dernier étant relié à la soufflante 16 à l'aide du réducteur 22. Le réducteur 22 ici représenté est du type épicycloïdal, avec des satellites montés sur le stator 38 de la turbomachine 2. Toutefois tout autre type de réducteurs, toute architecture est envisageable.

Le compresseur basse pression 4 comprend plusieurs redresseurs, en l'occurrence quatre, qui contiennent chacun une rangée d'aubes statoriques 36. Les redresseurs sont associés au fan 16 ou à une rangée d'aubes rotoriques 34 pour redresser le flux d'air 18, de sorte à convertir la vitesse du flux en pression statique.

Le refroidisseur 26 comprend une première surface d'échange thermique en contact de l'huile du circuit d'huile à refroidir. Il comporte par ailleurs une deuxième surface 40 d'échange thermique en contact du flux d'air secondaire 20 traversant la turbomachine. La deuxième surface pourrait également être en contact de l'air entourant le carter externe 24. Ce flux secondaire 20 absorbe les calories du refroidisseur et abaisse la température de l'huile. Il joue le rôle de source froide dans le refroidissement de l'huile, considérée ici comme la source chaude.

Pour accroître les performances du refroidisseur 26, un dispositif d'injection 42 de liquide de refroidissement lui est rapporté. Le liquide est projeté vers la deuxième surface 40 pour rentrer à son contact, ce qui amplifie le refroidissement que procure l'air. Le flux 20 peut rabattre le liquide sur la deuxième surface 40. Cette dernière étant normalement en contact du flux d'air 20 est partiellement ou majoritairement aspergée. Ainsi, l'huile est davantage refroidie, plus rapidement. L'étendue, l'aire utile, de la première surface d'échange thermique en contact de l'huile peut être réduite. Le liquide peut comprendre des additifs pour améliorer sa capacité thermique. Il peut majoritairement comprendre de l'eau.

Le liquide peut présenter une température d'ébullition, par exemple inférieure à la température de la deuxième surface 40 lors du fonctionnement de la turbomachine 2, éventuellement lorsque l'aéronef est au sol. Grâce à cette propriété, le liquide change de phase et devient gazeux, par exemple de la vapeur. Ce changement de phase s'accompagne d'une absorption d'énergie, c'est-à-dire de chaleur. Cette réaction thermodynamique refroidit encore le refroidisseur. La température d'ébullition peut être égale à 100°C.

La turbomachine 2 présente un échappement en sortie de la turbine, elle est configurée pour évacuer le liquide via ledit échappement. En évacuant le liquide dans le flux d'échappement, la poussée de la turbomachine 2 progresse. En corolaire, pour une même poussée, l'échauffement devient moindre, le besoin en refroidissement diminue tout comme la taille du refroidisseur 26 nécessaire.

Pour fournir le liquide, la turbomachine 2 peut comprendre des moyens d'alimentation en liquide, tels de tuyaux 44 ; et éventuellement un réservoir de liquide (non représenté). Toutefois, le réservoir peut être propre à l'aéronef et alimenter plusieurs turbomachines 2.

Le refroidisseur 26 comprend des ailettes de refroidissement 46 formant, complétant, prolongeant, la deuxième surface 40. Ces ailettes 46 peuvent s'étendre radialement depuis la paroi délimitant le flux secondaire. Leur présence augmente la surface d'échange disponible, ce qui améliore la capacité de refroidissement. Le bec de séparation, le circuit d'huile, les ailettes peuvent correspondre à ceux du document EP2075194A1.

Le dispositif d'injection 42 comprend des moyens d'injection 48 configurés pour injecter du liquide sur la deuxième surface 40. Les moyens 48 comprennent des buses 48. Dans une alternative qui n'est pas revendiquée, les moyens 48 peuvent comprendre des orifices 48. Les moyens peuvent pulvériser le liquide sous forme de gouttelettes, ou sous la forme de jets. Avantageusement, les moyens d'injection 48 sont placés en amont de la deuxième surface 40. Alternativement, ils sont disposés au niveau axialement de la moitié amont, ou du tiers amont, ou du quart amont, de la deuxième surface 40.

Chaque moyen d'injection 48 peut comprendre une portion faisant saillie par rapport à la deuxième surface 40. Les moyens d'injection 48 peuvent être configurés pour injecter du liquide sur les ailettes 46. Préférentiellement chaque moyen d'injection 48 est disposé axialement en aval de la soufflante 16, éventuellement les moyens d'injection 48 sont répartis sur un cercle. Ils peuvent être répartis sur une surface tubulaire pour refroidir de manière homogène la deuxième surface 40.

Le bec de séparation 32 peut former un corps de matière. La turbomachine 2 peut comprendre un serpentin de refroidissement 50 en communication avec le circuit d'huile. Le serpentin 50 peut former des séries de créneaux pour y augmenter la longueur de circulation de l'huile sur une même surface, ce qui augmente l'échange thermique effectif. Le séparateur 26 comporte des moyens d'alimentation telle une conduite d'entrée chaude 52 et une conduite de sortie froide 54, qui renvoi l'huile aux équipements ou au réservoir.

La turbomachine 2 peut comprendre un capteur de température (non représenté) de l'huile du circuit. Eventuellement le dispositif d'injection 42 est configuré pour injecter du liquide sur la deuxième surface 40 dès que le capteur détecte que la température de l'huile dépasse une température seuil TS.

La figure 3 illustre un diagramme du procédé de refroidissement de la turbomachine. La turbomachine peut correspondre à celle représentée en figure 1. Le procédé permet de commander au moins un ou chaque refroidisseur de la turbomachine, de manière autonome ou séparée.

La turbomachine comporte un circuit d'huile et un refroidisseur d'huile tel que détaillé précédemment. Le procédé prévoit d'injecter du liquide de refroidissement sur le refroidisseur, dont la deuxième surface, lorsqu'une/dès qu'une condition d'injection est rencontrée. Par exemple, le procédé peut prévoir que du liquide de refroidissement est injecté lors du décollage de l'aéronef.

A la place ou en complément, de cette condition, le procédé peut prévoir d'injecter du liquide en fonction de l'évolution de la vitesse de rotation du rotor de la turbomachine. Dès que l'accélération du régime de la turbomachine dépasse un seuil AR, du liquide est injecté pour refroidir.

Une condition d'altitude peut être prise en compte pour commander l'injection. Puisque la température de l'air ambiant diminue en altitude, passé une altitude seuil AS, un refroidissement additionnel par liquide n'est plus nécessaire. Ainsi, tant que l'altitude de la turbomachine reste inférieure à une altitude seuil AS, le dispositif d'injection injecte du liquide. Dès que l'altitude seuil AS est dépassée, l'injection cesse.

La température de l'environnement et/ou la température de l'huile peut être prise en compte. Dès que la température de l'huile de lubrification de la turbomachine dépasse une température seuil TS, de l'eau est injectée.

Optionnellement, plusieurs conditions combinées doivent être réunies pour l'injection de liquide. La combinaison de conditions peut inclure l'altitude ; le régime moteur et/ou l'accélération de régime.

Selon le procédé, le refroidisseur est un refroidisseur air/huile. Avantageusement, le liquide correspond à celui détaillé précédemment.

## Revendications

1. Turbomachine (2) axiale d'aéronef destinée à être en contact d'au moins un flux d'air (20), la turbomachine comprenant un circuit d'huile avec au moins un refroidisseur (26), le refroidisseur comportant :
- une première surface d'échange thermique en contact de l'huile du circuit d'huile ; et
- une deuxième surface (40) d'échange thermique en contact du flux d'air (20) de sorte à ce que le refroidisseur (26) puisse refroidir l'huile grâce au flux d'air, la deuxième surface (40) étant sensiblement axisymétrique autour de l'axe de la turbomachine (2) ;
turbomachine dans laquelle
le refroidisseur (26) comprend un dispositif d'injection (42) de liquide de refroidissement, notamment d'eau, sur la deuxième surface (40) afin de la refroidir pour augmenter la capacité de refroidissement de l'huile lorsque le liquide est injecté,
le dispositif d'injection (42) comprenant une pluralité de buses (48) réparties en cercle autour de l'axe de la turbomachine (2).

2. Turbomachine (2) selon la revendication 1, **caractérisée en ce qu'**elle comprend un carter annulaire externe (24) délimitant radialement le flux d'air (20), le dispositif d'injection (42) étant disposé axialement au niveau dudit carter externe (24).

3. Turbomachine (2) selon l'une des revendications 1 à 2, **caractérisée en ce que** les buses (48) sont placées en amont de la deuxième surface (40) ou au niveau axialement de la moitié amont de la deuxième surface (40).

4. Turbomachine (2) selon l'une des revendications 1 à 3, **caractérisée en ce que** le refroidisseur (26) comprend des ailettes de refroidissement (46) formant la deuxième surface (40), les buses d'injection (48) étant configurées pour injecter du liquide sur les ailettes (46).

5. Turbomachine (2) selon l'une des revendications 1 à 4, **caractérisée en ce qu'**elle comprend une veine annulaire guidant le flux d'air (20) et un passage (28) avec une entrée et une sortie toutes deux en communication avec la veine annulaire, le refroidisseur (26) étant placé dans ledit passage (28).

6. Turbomachine (2) selon l'une des revendications 1 à 5, **caractérisée en ce qu'**elle comprend une tuyère convergente divergente, le refroidisseur (26) étant placé en amont de ladite tuyère.

7. Turbomachine (2) selon l'une des revendications 1 à 6, **caractérisée en ce que** le refroidisseur (26) présente une forme annulaire, éventuellement le refroidisseur entoure le flux d'air (20).

8. Turbomachine (2) selon l'une des revendications 1 à 7, **caractérisée en ce qu'**elle comprend un corps avec un serpentin de refroidissement (50) en communication avec le circuit d'huile, éventuellement le corps est une aube ou un bec de dégivrage (32) de la turbomachine (2).

9. Turbomachine (2) selon l'une des revendications 1 à 8, **caractérisée en ce qu'**elle comprend au moins un actionneur commandé par la pression de l'huile du circuit d'huile, préférentiellement elle comprend une pompe pressurisant l'huile vers l'actionneur.

10. Turbomachine (2) selon l'une des revendications 1 à 9, **caractérisée en ce qu'**elle comprend un réducteur (22), notamment un réducteur épicycloïdal, qui est lubrifié par l'huile du circuit d'huile, éventuellement la turbomachine (2) comprend une soufflante (16) et/ou un compresseur (4 ; 6), le réducteur (22) relie en rotation la soufflante (16) et/ou le compresseur (4 ; 6).

11. Turbomachine (2) selon l'une des revendications 1 à 10, **caractérisée en ce qu'**elle comprend un capteur de température de l'huile apte à mesurer la température de l'huile du circuit d'huile, éventuellement le dispositif d'injection (42) est configuré pour injecter du liquide sur la deuxième surface (40) dès que le capteur détecte que la température de l'huile dépasse une température seuil TS.

12. Procédé de refroidissement d'une turbomachine (2) d'aéronef comprenant un circuit d'huile avec un refroidisseur (26) adapté pour refroidir l'huile du circuit d'huile, le procédé comprenant les étapes suivantes :
(a) décollage de l'aéronef ;
**caractérisée en ce que** le procédé comprenant en outre une étape
(b) refroidissement de l'huile suite ou pendant l'étape (a) décollage ;
pendant l'étape (b) refroidissement du liquide est injecté sur le refroidisseur (26) de la turbomachine (2), la turbomachine (2) étant conforme à l'une des revendications 1 à 11.

13. Procédé selon la revendication 12, **caractérisé en ce que** le refroidisseur (26) est un refroidisseur air/huile.

14. Procédé selon l'une des revendications 12 à 13, **caractérisé en ce que** le liquide est injecté lorsque l'accélération du régime de la turbomachine (2) dépasse un seuil AR.

15. Procédé selon l'une des revendications 12 à 14, **caractérisé en ce que** le liquide est injecté tant que l'altitude de la turbomachine (2) reste inférieure à une altitude seuil AS, et/ou tant que la température de l'huile de lubrification de la turbomachine (2) dépasse un seuil TS.

## Patentansprüche

1. Eine Flugzeug-Axialturbomaschine (2), die dazu ausgelegt ist, mit mindestens einem Luftstrom (20) in Kontakt zu kommen, wobei die Turbomaschine einen Ölkreislauf mit mindestens einem Kühler (26) umfasst, wobei der Kühler Folgendes umfasst:
- eine erste Wärmeübertragungsfläche, die mit dem Öl im Ölkreislauf in Kontakt ist; und
- eine zweite Wärmeübertragungsfläche (40) in Kontakt mit dem Luftstrom (20), so dass der Kühler (26) das Öl durch den Luftstrom kühlen kann, wobei die zweite Fläche (40) im Wesentlichen asymmetrisch um die Achse der Turbomaschine (2) ist;
eine Turbomaschine, wobei
der Kühler (26) eine Einspritzvorrichtung (42) umfasst, mit der ein Kühlmittel, insbesondere Wasser, auf die zweite Oberfläche (40) eingespritzt wird, um diese zu kühlen, um die Kühlleistung des Öls zu erhöhen, wenn das Kühlmittel eingespritzt wird,
die Einspritzvorrichtung (42) eine Vielzahl von Düsen (48) aufweist, die kreisförmig um die Achse der Turbomaschine (2) angeordnet sind.

2. Turbomaschine (2) nach Anspruch 1, **dadurch gekennzeichnet, dass** sie mit einem äußeren ringförmigen Gehäuse (24) versehen ist, das den Luftstrom (20) radial begrenzt, wobei die Einspritzvorrichtung (42) axial an diesem äußeren Gehäuse (24) angeordnet ist.

3. Turbomaschine (2) nach einem der Ansprüche 1 bis 2, **dadurch gekennzeichnet, dass** die Düsen (48) stromaufwärts der zweiten Fläche (40) oder axial in der stromaufwärts gelegenen Hälfte der zweiten Fläche (40) angeordnet sind.

4. Turbomaschine (2) nach einem der Ansprüche 1 bis 3, **dadurch gekennzeichnet, dass** der Kühler (26) mit Kühlrippen (46) ausgestattet ist, die die zweite Oberfläche (40) bilden, wobei die Einspritzdüsen (48) so gestaltet sind, dass sie Flüssigkeit auf die Kühlrippen (46) spritzen.

5. Turbomaschine (2) nach einem der Ansprüche 1 bis 4, **dadurch gekennzeichnet, dass** sie einen ringförmigen Kanal, der den Luftstrom (20) leitet, und einen Durchgang (28) mit einem Eingang und einem Ausgang, der mit dem ringförmigen Kanal in Verbindung steht, umfasst, wobei der Kühler (26) in dem jeweiligen Durchgang (28) angeordnet ist.

6. Turbomaschine (2) nach einem der Ansprüche 1 bis 5, **dadurch gekennzeichnet, dass** sie eine divergente, konvergente Düse aufweist, wobei der Kühler (26) stromaufwärts von dieser Düse angeordnet ist.

7. Turbomaschine (2) nach einem der Ansprüche 1 bis 6, **dadurch gekennzeichnet, dass** der Kühler (26) eine Ringform aufweist, wobei der Kühler gegebenenfalls den Luftstrom (20) umgibt.

8. Turbomaschine (2) nach einem der Ansprüche 1 bis 7, **dadurch gekennzeichnet, dass** sie einen Körper mit einer Kühlschlange (50) umfasst, die mit dem Ölkreislauf in Verbindung steht, wobei der Körper möglicherweise eine Schaufel oder eine Enteisungsdüse (32) der Turbomaschine (2) ist.

9. Turbomaschine (2) nach einem der Ansprüche 1 bis 8, **dadurch gekennzeichnet, dass** sie mindestens einen Aktuator umfasst, der durch den Öldruck im Ölkreislauf gesteuert wird, und vorzugsweise auch eine Pumpe umfasst, die das Öl zum Aktuator unter Druck setzt.

10. Turbomaschine (2) nach einem der Ansprüche 1 bis 9, **dadurch gekennzeichnet, dass** sie ein Getriebe (22), insbesondere ein Umlaufrädergetriebe, umfasst, das durch das Öl im Ölkreislauf geschmiert wird, wobei die Turbomaschine (2) optional mit einem Gebläse (16) und/oder einem Verdichter (4; 6) versehen ist, wobei das Getriebe (22) das Gebläse (16) und/oder den Verdichter (4; 6) drehbar verbindet.

11. Turbomaschine (2) nach einem der Ansprüche 1 bis 10, **dadurch gekennzeichnet, dass** sie einen Öltemperatursensor umfasst, der die Temperatur des Öls im Ölkreislauf misst, wobei die Einspritzvorrichtung (42) so gestaltet sein kann, dass sie Flüssigkeit auf die zweite Oberfläche (40) einspritzt, sobald der Sensor erkennt, dass die Öltemperatur eine Temperaturschwelle TSW überschreitet.

12. Verfahren zum Kühlen einer Turbomaschine (2) eines Flugzeugs, die einen Ölkreislauf mit einem Kühler (26) umfasst, der zum Kühlen von Öl in dem Ölkreislauf geeignet ist, wobei das Verfahren die folgenden Schritte umfasst:
(a) Abheben des Flugzeugs;
**dadurch gekennzeichnet, dass** das Verfahren ferner einen Schritt
(b) des Kühlens des Öls nach oder während des Abhebens (a) umfasst;
während des Kühlschritts (b) wird Flüssigkeit auf den Kühler (26) der Turbomaschine (2) eingespritzt, wobei die Turbomaschine (2) einem der Ansprüche 1 bis 11 entspricht.

13. Verfahren nach Anspruch 12, **dadurch gekennzeichnet, dass** der Kühler (26) ein Luft/Öl-Kühler ist.

14. Verfahren nach einem der Ansprüche 12 bis 13, **dadurch gekennzeichnet, dass** die Flüssigkeit eingespritzt wird, wenn die Beschleunigung der Turbomaschine (2) einen Schwellenwert AR überschreitet.

15. Verfahren nach einem der Ansprüche 12 bis 14, **dadurch gekennzeichnet, dass** die Flüssigkeit eingespritzt wird, solange die Höhe der Turbomaschine (2) unter einem Höhenschwellenwert AS bleibt und/oder solange die Temperatur des Schmieröls der Turbomaschine (2) einen Temperaturschwellenwert TS überschreitet.

## Claims

1. Axial turbomachine (2) for an aircraft, intended to be in contact with at least one air flow (20), the turbomachine comprising an oil circuit with at least one cooler (26), the cooler comprising:
- a first heat exchange surface in contact with the oil of the oil circuit; and
- a second heat exchange surface (40) in contact with the air flow (20) such that the cooler (26) can cool the oil by means of the air flow;
**characterized in that**
the cooler (26) comprises a device (42) for injecting cooling liquid, in particular water, onto the second surface (40) in order to cool it, to increase the cooling capacity of the oil when the liquid is injected
the injection device (42) comprises injection means (48) arranged in a circle around the axis of the turbomachine (2).

2. Turbomachine (2) according to Claim 1, **characterized in that** it comprises an external annular casing (24) radially delimiting the airflow (20), the injection device (42) being arranged axially at the level of said external casing (24).

3. Turbomachine (2) according to one of Claims 1 and 2, **characterized in that** the injection means (48) being placed upstream of the second surface (40) or axially at the level of the upstream half of the second surface (40).

4. Turbomachine (2) according to any of Claims 1 to 3, **characterized in that** the cooler (26) comprises cooling fins (46) forming the second surface (40), the injection device (42) comprising injection means (48) configured to inject liquid onto the fins (46).

5. Turbomachine (2) according to any of Claims 1 to 4, **characterized in that** it comprises an annular jet guiding the air flow (20) and a passage (28) with an inlet and an outlet, both in communication with the annular jet, the cooler (26) being placed in said passage (28).

6. Turbomachine (2) according to any of Claims 1 to 5, **characterized in that** it comprises a convergent-divergent nozzle, the cooler (26) being placed upstream of said nozzle.

7. Turbomachine (2) according to any of Claims 1 to 6, **characterized in that** the cooler (26) has an annular form, wherein the cooler may surround the air flow (20).

8. Turbomachine (2) according to any of Claims 1 to 7, **characterized in that** it comprises a body with a cooling coil (50) in communication with the oil circuit, wherein the body may be a vane or a defrosting tip (32) of the turbomachine (2).

9. Turbomachine (2) according to any of Claims 1 to 8, **characterized in that** it comprises at least one actuator controlled by the oil pressure of the oil circuit, preferably it comprises a pump pressurizing the oil towards the actuator.

10. Turbomachine (2) according to any of Claims 1 to 9, **characterized in that** it comprises a reducing gear (22), in particular an epicyclic reducing gear which is lubricated by the oil of the oil circuit, wherein the turbomachine (2) may comprise a fan (16) and/or a compressor (4; 6), the reducing gear (22) connects the fan (16) and/or the compressor (4; 6) in rotation.

11. Turbomachine (2) according to any of Claims 1 to 10, **characterized in that** it comprises an oil temperature sensor able to measure the temperature of the oil in the oil circuit, wherein the injection device (42) may be configured to inject liquid onto the second surface (40) as soon as the sensor detects that the oil temperature exceeds a temperature threshold TS.

12. Method for cooling a turbomachine (2) of an aircraft comprising an oil circuit with a cooler (26) adapted to cool the oil of the oil circuit, the method comprising the following steps:
(a) aircraft take-off ;
**characterized in that** the method further comprising a step
(b) cooling the oil following or during step (a) take-off;
during step (b) cooling liquid is injected onto the cooler (26) of the turbomachine (2), the turbomachine (2) being according to one of claims 1 to 11.

13. Method according to Claim 12, **characterized in that** the cooler (26) is an air/oil cooler.

14. Method according to any of Claims 12 to 13, **characterized in that** the liquid is injected when the rotation speed acceleration of the turbomachine (2) exceeds a threshold AR.

15. Method according to any of Claims 12 to 14, **characterized in that** the liquid is injected as long as the altitude of the turbomachine (2) remains below an altitude threshold AS, and/or as long as the temperature of the lubricating oil of the turbomachine (2) exceeds a threshold TS.
